# EUROPÄISCHE PATENTSCHRIFT

(11) **EP 3 554 901 B1**
(45) Veröffentlichungstag und Bekanntmachung des Hinweises auf die Patenterteilung: **14.07.2021**
(21) Anmeldenummer: 17781118.9
(22) Anmeldetag: 10.10.2017
(51) Int. Cl.: B60T 8/40, B60T 13/66

(54) **VERFAHREN ZUR ANSTEUERUNG EINES HYDRAULISCHEN BREMSSYSTEMS IN EINEM FAHRZEUG**
METHOD FOR CONTROLLING A HYDRAULIC BRAKE SYSTEM IN A VEHICLE
PROCÉDÉ DE COMMANDE D'UN SYSTÈME DE FREINAGE HYDRAULIQUE DANS UN VÉHICULE

(30) Priorität: 14.12.2016 DE 102016224896
(43) Veröffentlichungstag der Anmeldung: 23.10.2019
(73) Patentinhaber: Robert Bosch GmbH, 70442 Stuttgart (DE)
(72) Erfinder: SCHMIDT, Thomas, 74321 Bietigheim-Bissingen (DE); STREHLE, Alfred, 70736 Fellbach (DE); BRAND, Mirko, 71723 Grossbottwar (DE)
(86) Internationale Anmeldenummer: PCT/EP2017/075736
(87) Internationale Veröffentlichungsnummer: WO 2018/108351

(56) Entgegenhaltungen:
- EP-A2- 0 780 276
- WO-A1-2015/177207
- WO-A1-2016/184616
- DE-A1-102013 227 066
- DE-A1-102014 111 594
- DE-A1-102014 212 537
- DE-A1-102014 220 441
- DE-A1-102015 103 859
- DE-A1-102015 206 727
- DE-A1-102016 201 261
- DE-A1-102016 203 111

## Beschreibung

Die Erfindung bezieht sich auf ein Verfahren zur Ansteuerung eines hydraulischen Bremssystems in einem Fahrzeug, wobei das Bremssystem mit einer Bremsaktuatorik zur Erzeugung von hydraulischem Bremsdruck an Radbremseinheiten an den Vorderrädern und den Hinterrädern des Fahrzeugs ausgestattet ist.

### Stand der Technik

In der DE 10 2009 046 339 A1 wird ein hydraulisches Bremssystem in einem Fahrzeug mit zwei Bremskreisen zur Versorgung von Radbremseinheiten mit hydraulischem Bremsfluid beschrieben. Die Bremskreise sind an einen gemeinsamen Hauptbremszylinder angeschlossen, aus dem bei einer Betätigung des Bremspedals das Bremsfluid in die Bremskreise gefördert wird.

In jedem Bremskreis befindet sich eine Hydraulikpumpe, wobei die beiden Hydraulikpumpen von einem gemeinsamen Pumpenmotor angetrieben werden. Die Hydraulikpumpen sind Bestandteil eines elektronischen Stabilitätsprogrammes, über das ein selbsttätiger Eingriff in das Bremssystem durchgeführt werden kann. Bei aktivierten Hydraulikpumpen wird Bremsfluid aus dem Hauptbremszylindern in die Bremskreise gefördert.

Die WO 2016/184616 A1 offenbart ein hydraulisches Bremssystem für ein Fahrzeug mit einer Hydraulikdruckerzeuger-Baugruppe mit einer ersten und einer zweiten Zylinderkolbeneinrichtung sowie einem elektromechanischen Aktuator, der auf die zweite Zylinderkolbeneinrichtung einwirkt. Im Normalbetrieb sind die Zylinderkolbeneinrichtungen hydraulisch gekoppelt. Bei einem Ausfall des elektromechanischen Aktors wird ein Kolben der ersten Zylinderkolbeneinrichtung in einem sogenannten Push-Through-Betrieb betätigt. Über den elektromechanischen Aktor kann auch eine fahrerunabhängige Stabilisierungsfunktion eingestellt werden. Dies ist jedoch bei einem Ausfall des Aktors nicht mehr möglich.

Die DE 10 2013 227 066 A1 zeigt ein hydraulisches Bremssystem mit einer ersten Druckerzeugungseinheit, welche einen über einen Antriebsmotor verstellbaren Plunger umfasst, und mit einer zweiten Bremsdruckerzeugungseinheit in Form eines ESP-Hydraulikaggregates. Bei einem Ausfall der Druckerzeugungseinheit kann mittels der zweiten Bremsdruckerzeugungseinrichtung der Bremsdruck aufgebaut werden.

### Offenbarung der Erfindung

Das erfindungsgemäße Verfahren bezieht sich auf die Ansteuerung eines hydraulischen Bremssystems in einem Fahrzeug, das mit einer primären Bremsaktuatorik und einer sekundären Bremsaktuatorik ausgestattet ist, wobei sowohl die primäre als auch die sekundäre Bremsaktuatorik zur Erzeugung von hydraulischem Bremsdruck an Radbremseinheiten an den Vorderrädern und an den Hinterrädern des Fahrzeugs verwendet werden können. Das Verfahren kann gegebenenfalls bei einem automatisierten Fahren angewandt werden, aber auch bei pilotiertem Fahren. Im regulären Bremsbetrieb - bei funktionstüchtiger primärer Bremsaktuatorik - kann zur Unterstützung des Bremsvorgangs oder zur Durchführung eines selbsttätigen Stabilisierungsprozesses über die primäre Bremsaktuatorik ein Eingriff in das hydraulische Bremssystem durchgeführt werden. Hierzu wird der Bremsdruck über die primäre Bremsaktuatorik moduliert, wobei ggf. einstellbare Ventile in einer oder in mehreren Radbremseinheiten an den Vorderrädern und/oder an den Hinterrädern verstellt werden. Beispielsweise können einstellbare Einlassventile an den Radbremseinheiten an den Hinterrädern des Fahrzeugs geschlossen und an den Vorderrädern des Fahrzeugs geöffnet werden, um zum einen eine hohe Bremswirkung zu erzielen und zum anderen ein Überbremsen der Radbremseinheiten an den Hinterrädern und damit einhergehend ein instabiles Fahrzeug, insbesondere ein Blockieren der Hinterräder und/oder eine Gierbewegung des Fahrzeugs zu vermeiden.

Bei funktionstüchtiger primärer Bremsaktuatorik wird die sekundäre Bremsaktuatorik, über die ebenfalls der hydraulische Bremsdruck beeinflussbar ist, vorzugsweise nur ergänzend oder gar nicht betätigt. So ist es beispielsweise möglich, die sekundäre Bremsaktuatorik zur Bremskraftunterstützung heranzuziehen, beispielsweise über den Hauptbremszylinder, der von der sekundären Bremsaktuatorik elektrisch verstellt werden kann.

Bei einem Ausfall der primären Bremsaktuatorik wird der hydraulische Bremsdruck über die sekundäre Bremsaktuatorik moduliert, wobei zur Stabilisierung des Fahrzeugs die Einlassventile an den Radbremseinheiten der Hinterräder in der Weise ausgebildet sind, dass der Bremsdruck an den Radbremseinheiten der Hinterräder einen Grenzdruck nicht überschreitet. Die Aktivierung der sekundären Bremsaktuatorik erfolgt zum Zwecke der Stabilisierung des Fahrzeugs während eines Bremsvorgangs.

Bei der Stabilisierung, insbesondere der Längsstabilisierung durch die sekundäre Bremsaktuatorik wird der notwendige Bremsdruck aktiv unter Berücksichtigung von Stabilitätskriterien durch die sekundäre Bremsaktuatorik moduliert. Die sekundäre Bremsaktuatorik kann die Verzögerung und Stabilisierung übernehmen, solange der Fahrer bei einem automatisierten Fahren noch nicht wieder die Kontrolle übernommen hat. Grundsätzlich ist es aber auch möglich, dass die Längsstabilisierung über die sekundäre Bremsaktuatorik während einer Fahrerinteraktion weitergeführt wird.

Die Einlassventile an den Hinterrädern des Fahrzeugs sind im stromlosen Zustand geschlossen, sie werden jedoch mit dem Übersteigen eines definierten Differenzdrucks in Öffnungsstellung versetzt. Die Einlassventile werden beim Ausfall der primären Bremsaktuatorik nicht angesteuert, sondern sind an den Hinterrädern so ausgeprägt, dass sie einen definierten notwendigen Differenzdruck über die Federspannung eines auf sie wirkenden Federelements einstellen. Somit stehen die Einlassventile an den Hinterrädern im stromlosen Zustand zunächst in Schließstellung, so dass bei verhältnismäßig niedrigem Brems-Vordruck nur Bremskraft an den Vorderrädern erzeugt wird, und werden erst bei höherem Brems-Vordruck in Öffnungsstellung versetzt, so dass zusätzlich auch an den Hinterrädern Bremskraft erzeugt wird. Die Einlassventile an den Vorderrädern des Fahrzeugs sind vorteilhafterweise im stromlosen Zustand geöffnet.

Die sekundäre Bremsaktuatorik ist einkanalig ausgebildet und versorgt alle Radbremseinheiten im Bremssystem, also sowohl die Radbremseinheiten an der Vorderachse als auch die Radbremseinheiten an der Hinterachse mit dem gleichen Bremsdruck. Diese Ausführung hat den Vorteil, dass verhältnismäßig einfach aufgebaute sekundäre Bremsaktuatoriken verwendet werden können und dennoch eine Fahrzeugstabilisierung bei einem Ausfall der primären Bremsaktuatorik erreicht wird. Die Modulierung des Bremsdrucks an den Radbremseinheiten der Hinterachse wird bei funktionstüchtiger primärer Bremsaktuatorik über eine Betätigung der Einlassventile an diesen Radbremseinheiten durchgeführt, wohingegen bei einem Ausfall der primären Bremsaktuatorik über die sekundäre Bremsaktuatorik und die Differenzdruck abhängig geschlossenen oder dauerhaft geschlossenen Einlassventile an der Hinterachse ein Abbremsen bei zugleich stabilem Fahrzeug durchgeführt wird.

Bei der primären Bremsaktuatorik handelt es sich um ein ESP-System (elektronisches Stabilitätsprogramm), das mit mindestens einer Hydraulikpumpe ausgebildet ist, über die selbsttätig der hydraulische Bremsdruck im Bremssystem moduliert werden kann.

Vorteilhafterweise umfasst das Bremssystem zwei Bremskreise, in denen jeweils zwei Radbremseinheiten angeordnet sind. Hierbei kommen sowohl Bremskreise in Betracht, die über Kreuz angeordnet sind und somit jeweils ein Rad an der Vorderachse und diagonal gegenüberliegend an der Hinterachse umfassen, als auch Bremskreise, die achsbezogen sind, so dass jeder Bremskreis die beiden Radbremseinheiten an jeweils einer Fahrzeugachse umfasst.

In der Ausführung der primären Bremsaktuatorik als ESP-System umfasst dieses in bevorzugter Ausführung jeweils eine Hydraulikpumpe in jedem Bremskreis. Die beiden Hydraulikpumpen können ggf. über einen gemeinsamen Pumpenmotor angetrieben werden.

Die sekundäre Bremsaktuatorik ist als ein elektromechanischer Bremskraftverstärker ausgebildet, der den Hauptbremszylinder im Bremssystem betätigt bzw. unterstützt. Der elektromechanische Bremskraftverstärker umfasst beispielsweise einen Elektromotor, der über ein Getriebe den Hauptbremszylinder betätigt. Bei einem Ausfall der primären Bremsaktuatorik kann der Elektromotor der sekundären Bremsaktuatorik angesteuert werden.

Bei einem Ausfall der primären Bremsaktuatorik bleiben die Einlassventile an den Radbremseinheiten der Vorderräder gemäß weiterer zweckmäßiger Ausführung in der geöffneten Position, um sicherzustellen, dass der hydraulische Bremsdruck an den Radbremseinheiten der Vorderräder vollständig wirksam ist und eine hohe Bremskraft in diesen Radbremseinheiten erzeugt wird.

Gemäß einer weiteren vorteilhaften Ausführung stehen die Einlassventile an den Radbremseinheiten der Vorderräder bei einem Ausfall der primären Bremsaktuatorik in einer größeren Öffnungsposition als die Einlassventile an den Radbremseinheiten der Hinterräder. Dementsprechend sind die Einlassventile an den Vorderrädern weiter geöffnet als an den Hinterrädern und ermöglichen an den Vorderrädern eine höhere Bremskraft als an den Hinterrädern.

Gemäß noch einer weiteren zweckmäßigen Ausführung wird der Fehlerzustand der primären Bremsaktuatorik in einem zugeordneten Steuergerät ausgewertet, das auch Stellsignale zur Ansteuerung der sekundären Bremsaktuatorik erzeugt. In einer anderen vorteilhaften Ausführung erfolgt die Ansteuerung der sekundären Bremsaktuatorik unabhängig von der Ansteuerung der primären Bremsaktuatorik.

Die Erfindung bezieht sich des Weiteren auf ein hydraulisches Bremssystem in einem Fahrzeug, das zur Durchführung des vorbeschriebenen Verfahrens ausgebildet ist und entsprechend mit einer primären Bremsaktuatorik und einer sekundären Bremsaktuatorik zur Erzeugung von hydraulischem Bremsdruck an den Radbremseinheiten sowohl der Vorderräder als auch der Hinterräder ausgestattet ist. Der Bremsdruck ist über die Einlassventile, die den Radbremseinheiten zugeordnet sind, einstellbar.

Des Weiteren bezieht sich die Erfindung auf ein Steuergerät, mit dem die einstellbaren Komponenten des Bremssystems angesteuert werden.

Weitere Vorteile und zweckmäßige Ausführungen sind den weiteren Ansprüchen, der Figurenbeschreibung und den Zeichnungen zu entnehmen. Es zeigen:
- Fig. 1: einen hydraulischen Schaltplan eines Fahrzeugbremssystems mit zwei Bremskreisen und mit einer ersten und einer zweiten Bremsaktuatorik,
- Fig. 2: ein Ablaufschema mit Verfahrensschritten zur Fahrzeugstabilisierung bei einem Ausfall eines ESP-Systems.

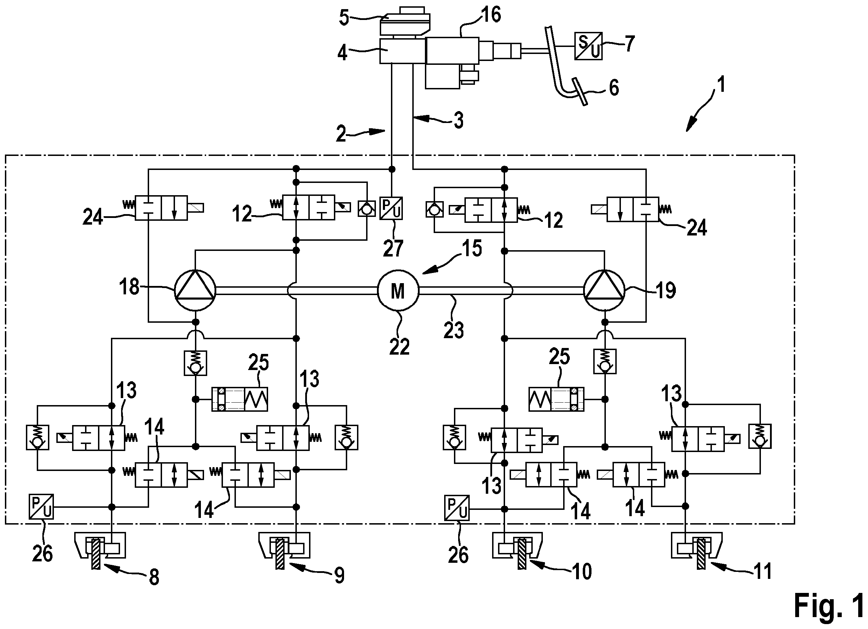

Das im Hydraulikschaltplan gemäß Fig. 1 dargestellte hydraulische Bremssystem 1 in einem Fahrzeug weist zwei über Kreuz angeordnete Bremskreise 2 und 3 auf. Der erste Bremskreis 2 und der zweite Bremskreis 3 dienen zur Versorgung von Radbremseinheiten 8 und 9 an den Rädern hinten rechts und vorne links bzw. 10 und 11 an den Rädern vorne rechts und hinten links mit hydraulischem Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinder 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein elektromechanischer Bremskraftverstärker 16, der beispielsweise einen Elektromotor umfasst, welcher bevorzugt über ein Getriebe den Hauptbremszylinder 4 betätigt.

In jedem Bremskreis 2, 3 ist ein Umschaltventil 12 angeordnet, das im Strömungsweg zwischen dem Hauptbremszylinder und den jeweiligen Radbremseinheiten 8 und 9 bzw. 10 und 11 liegt. Die Umschaltventile 12 sind in ihrer stromlosen Grundstellung geöffnet. Jedem Umschaltventil 12 ist ein parallel geschaltetes Rückschlagventil zugeordnet, das in Richtung der jeweiligen Radbremseinheiten durchströmbar ist.

Zwischen den Umschaltventilen 12 und den jeweiligen Radbremseinheiten 8, 9 bzw. 10, 11 befinden sich Einlassventile 13, denen Rückschlagventile zugeordnet sind, welche in Gegenrichtung, also von den Radbremseinheiten in Richtung zum Hauptbremszylinder durchströmbar sind. Die Einlassventile 13 an den Vorderrädern des Fahrzeugs sind stromlos geöffnet, die Einlassventile 13 an den Hinterrädern des Fahrzeugs sind im stromlosen Zustand geschlossen, sie werden jedoch mit dem Übersteigen eines definierten Differenzdrucks in Öffnungsstellung versetzt (differenzdruckabhängig stromlos geschlossen).

Jeder Radbremseinheit 8, 9 bzw. 10, 11 ist jeweils ein Auslassventil 14 zugeordnet, das stromlos geschlossen ist. Die Auslassventile 14 sind jeweils mit der Saugseite einer Pumpeneinheit 15 verbunden, die in jedem Bremskreis 2, 3 eine Pumpe 18 bzw. 19 aufweist. Der Pumpeneinheit ist ein gemeinsamer elektrischer Antriebs- bzw. Pumpenmotor 22 zugeordnet, der über eine Welle 23 beide Pumpen 18 und 19 betätigt. Die Druckseite der Pumpe 18 bzw. 19 ist an einen Leitungsabschnitt zwischen dem Umschaltventil 12 und den beiden Einlassventilen 13 pro Bremskreis angeschlossen.

Die Saugseiten der Pumpen 18 und 19 sind jeweils mit einem Haupt- bzw. Hochdruckschaltventil 24 verbunden, das an den Hauptbremszylinder 4 hydraulisch angeschlossen ist. Bei einem fahrdynamischen Regeleingriff können für einen schnellen Bremsdruckaufbau die im stromlosen Zustand geschlossenen Hauptschaltventile 24 geöffnet werden, so dass die Pumpen 18 und 19 unmittelbar aus dem Hauptbremszylinder 4 Hydraulikfluid ansaugen. Dieser Bremsdruckaufbau kann unabhängig von einer Betätigung des Bremssystems durch den Fahrer durchgeführt werden. Die Pumpeneinheit 15 mit den beiden Einzelpumpen 18 und 19, dem elektrischen Pumpenmotor 22 und der Welle 23 gehört zu einem Fahrerassistenzsystem und bildet ein elektronisches Stabilitätsprogramm (ESP-System), das insbesondere zur Fahrzeugstabilisierung aktiviert wird.

Zwischen den Auslassventilen 14 und der Saugseite der Pumpen 18 und 19 befindet sich pro Bremskreis 2, 3 ein Hydrospeicher 25, der zur Zwischenspeicherung von Bremsflüssigkeit dient, welche während eines fahrdynamischen Eingriffs durch die Auslassventile 14 aus den Radbremseinheiten 8, 9 bzw. 10, 11 ausgelassen wird. Jedem Hydrospeicher 25 ist ein Rückschlagventil zugeordnet, das in Richtung der Saugseiten der Pumpen 18, 19 öffnet.

Zur Druckmessung befindet sich in jedem Bremskreis 2, 3 im Bereich der Radbremseinheiten 8, 9 bzw. 10, 11 jeweils ein Drucksensor 26. Ein weiterer Drucksensor 27 ist im Bremskreis 2 benachbart zum Hauptbremszylinder 4 angeordnet.

Das ESP-System mit der Pumpeneinheit 15 bildet eine primäre Bremsaktuatorik zur fahrerunabhängigen Erzeugung von hydraulischem Bremsdruck an den Radbremseinheiten in beiden Bremskreisen 2, 3. Das ESP-System wird zur Fahrzeugstabilisierung eingesetzt, indem verschiedene Ventile im Bremssystem sowie die Pumpen 18 und 19 in der Weise angesteuert werden, dass ein Blockieren der Fahrzeugräder verhindert wird.

Bei einem Ausfall des ESP-Systems, beispielsweise bei einem Ausfall des elektrischen Antriebsmotors 22 der Pumpeneinheit 15, kann die Stabilisierungsfunktion von dem elektromechanischen Bremskraftverstärker 16 übernommen werden, der insbesondere bei einem automatisierten Fahren eine sekundäre Bremsaktuatorik bildet. Unter definierten Voraussetzungen kann der elektromechanische Bremskraftverstärker 16 zur selbsttätigen Modulation des Bremsdrucks in den Bremskreisen mit dem Ziel einer Fahrzeugstabilisierung eingesetzt werden.

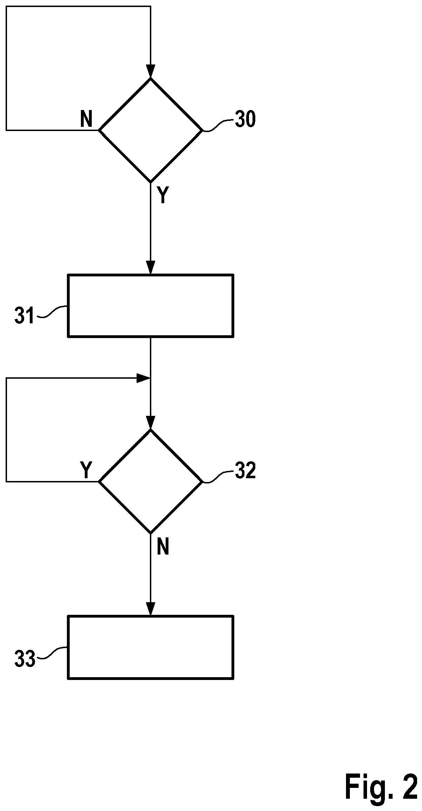

In Fig. 2 ist ein Ablaufschema mit einzelnen Verfahrensschritten zur Fahrzeugstabilisierung bei einem Ausfall des ESP-Systems dargestellt.

Zunächst wird im ersten Verfahrensschritt 30 überprüft, ob das ESP-System ausgefallen ist. Ist dies nicht der Fall, kann die primäre Bremsaktuatorik insbesondere auch während eines automatisierten Fahrens des Fahrzeugs ohne Einschränkung weiter eingesetzt werden. In diesem Fall wird der Nein-Verzweigung ("N") folgend wieder zum Beginn des Verfahrensschrittes 30 zurückgekehrt und in regelmäßigen Abständen erneut die Abfrage im Schritt 30 durchgeführt.

Ergibt dagegen die Überprüfung im Schritt 30, dass ein Ausfall des ESP-Systems vorliegt, wird der Ja-Verzweigung ("Y") folgend zum nächsten Schritt 31 vorgerückt, in welchem die sekundäre Bremsaktuatorik aktiviert wird, bei der es sich um den elektromechanischen Bremskraftverstärker handelt, der bei einem automatisierten Fahren zur selbsttätigen Modulation des Bremsdrucks mit dem Ziel einer Fahrzeugstabilisierung im Falle des Ausfalls der primären Bremsaktuatorik eingesetzt wird.

Die Einlassventile befinden sich aufgrund des Ausfalls des ESP-Systems in ihrem stromlosen Zustand. Dementsprechend sind die Einlassventile in den Radbremseinheiten an der Vorderachse geöffnet und in den Radbremseinheiten an der Hinterachse geschlossen. Aufgrund der Ausführung als differenzdruckabhängig stromlos geschlossene Ventile können die Einlassventile an der Hinterachse jedoch ebenfalls in Öffnungsstellung versetzt werden, sobald der anliegende Bremsdruck einen definierten Differenzdruck übersteigt. Auf diese Weise ist sichergestellt, dass auch bei einem Ausfall der primären Bremsaktuatorik das Fahrzeug während des selbsttätigen Abbremsens stabil fährt.

Im folgenden Verfahrensschritt 32 wird überprüft, ob der Differenzdruck an den Einlassventilen an der Hinterachse einen definierten Differenzdruck-Grenzwert übersteigt. Ist dies nicht der Fall, bleiben die Einlassventile an der Hinterachse geschlossen, so dass an den Radbremseinheiten an der Hinterachse keine Bremskraft erzeugt wird. Erst mit dem Übersteigen des Differenzdruck-Grenzwerts werden die Einlassventile an der Hinterachse selbsttätig geöffnet, und es wird der Ja-Verzweigung folgend zum nächsten Verfahrensschritt 33 vorgerückt, der ein Erzeugen von Bremskraft sowohl an den Radbremseinheiten der Vorderachse als auch an den Radbremseinheiten der Hinterachse repräsentiert, wobei an den Radbremseinheiten an der Vorderachse eine höhere Bremskraft als an der Hinterachse erzeugt wird.

Die Einlassventile an der Hinterachse agieren im stromlosen Zustand als passive Baueinheiten, wobei der Differenzdruck-Grenzwert von der Kraft eines Federelementes in den Einlassventilen an der Hinterachse bestimmt wird. Dementsprechend erfolgt das Öffnen der Einlassventile an der Hinterachse ohne Aktuierung dieser Einlassventile in selbsttätiger Weise allein bei einem Übersteigen des Differenzbremsdruck-Grenzwerts.

## Patentansprüche

1. Verfahren zur Ansteuerung eines hydraulischen Bremssystems in einem Fahrzeug, das eine primäre Bremsaktuatorik, die als ESP-System (Elektronisches Stabilitätsprogramm) mit einer Hydraulikpumpe (18, 19) ausgebildet ist, und eine sekundäre Bremsaktuatorik, die als elektromechanischer Bremskraftverstärker (16) ausgebildet ist, der einen Hauptbremszylinder (4) im Bremssystem betätigt, zur Erzeugung von hydraulischem Bremsdruck an Radbremseinheiten (8, 9, 10, 11) an den Vorderrädern und an den Hinterrädern des Fahrzeugs aufweist, wobei über einstellbare Einlassventile (13) der Bremsdruck in den Radbremseinheiten (8, 9, 10, 11) einstellbar ist, wobei bei einem Ausfall der primären Bremsaktuatorik der hydraulische Bremsdruck über die sekundäre Bremsaktuatorik erzeugt wird, wobei die Einlassventile (13) an den Hinterrädern des Fahrzeugs im stromlosen Zustand geschlossen sind, jedoch mit dem Übersteigen eines definierten Differenzdrucks in Öffnungsstellung versetzt werden, wobei die sekundäre Bremsaktuatorik einkanalig ausgebildet ist und alle Radbremseinheiten (8, 9, 10, 11) mit dem gleichen Bremsdruck versorgt.

2. Verfahren nach Anspruch 1, **dadurch gekennzeichnet, dass** die Einlassventile (13) an den Radbremseinheiten (8, 11) der Vorderräder als stromlos offene Ventile ausgebildet sind.

3. Verfahren nach Anspruch 1 oder 2, **dadurch gekennzeichnet, dass** die Einlassventile (13) an den Radbremseinheiten (8, 11) der Vorderräder bei einem Ausfall der primären Bremsaktuatorik und einer Bremsdruckerzeugung durch die sekundäre Bremsaktuatorik in geöffneter Position bleiben.

4. Verfahren nach einem der Ansprüche 1 bis 3, **dadurch gekennzeichnet, dass** die Einlassventile (13) an den Radbremseinheiten (9, 10) der Vorderräder bei einem Ausfall der primären Bremsaktuatorik und einer Bremsdruckerzeugung durch die sekundäre Bremsaktuatorik in einer größeren Öffnungsposition stehen als die Einlassventile (13) an den Radbremseinheiten (8, 9, 10, 11) der Hinterräder.

5. Verfahren nach einem der Ansprüche 1 bis 4, **dadurch gekennzeichnet, dass** der Fehlerzustand der primären Bremsaktuatorik in einem zugeordneten Steuergerät ausgewertet und die sekundäre Bremsaktuatorik von dem Steuergerät angesteuert wird.

6. Hydraulisches Bremssystem in einem Fahrzeug zur Durchführung des Verfahrens nach einem der Ansprüche 1 bis 5, mit einer primären Bremsaktuatorik und mit einer sekundären Bremsaktuatorik zur Erzeugung von hydraulischem Bremsdruck an Radbremseinheiten (8, 9, 10, 11) an den Vorderrädern und an den Hinterrädern des Fahrzeugs.

7. Steuergerät zur Ansteuerung der einstellbaren Komponenten des Bremssystems nach Anspruch 6.

## Claims

1. Method for controlling a hydraulic brake system in a vehicle, which hydraulic brake system has a primary brake actuator assembly, which is configured as an ESP system (electronic stability programme) with a hydraulic pump (18, 19), and a secondary brake actuator assembly, which is configured as an electromechanical brake booster (16) which actuates a master brake cylinder (4) in the brake system in order to generate hydraulic brake pressure at wheel brake units (8, 9, 10, 11) at the front wheels and at the rear wheels of the vehicle, wherein the brake pressure in the wheel brake units (8, 9, 10, 11) is settable by means of settable inlet valves (13), wherein, in the event of a failure of the primary brake actuator assembly, the hydraulic brake pressure is generated by means of the secondary brake actuator assembly, wherein the inlet valves (13) at the rear wheels of the vehicle are closed when electrically deenergized but are shifted into an open position with the overshooting of a defined pressure difference, wherein the secondary brake actuator assembly is of single-channel configuration and supplies all wheel brake units (8, 9, 10, 11) with the same brake pressure.

2. Method according to Claim 1, **characterized in that** the inlet valves (13) at the wheel brake units (8, 11) of the front wheels are configured to be open when electrically deenergized.

3. Method according to Claim 1 or 2, **characterized in that**, in the event of a failure of the primary brake actuator assembly and a generation of brake pressure by the secondary brake actuator assembly, the inlet valves (13) at the wheel brake units (8, 11) of the front wheels remain in an opened position.

4. Method according to any one of Claims 1 to 3, **characterized in that**, in the event of a failure of the primary brake actuator assembly and a generation of brake pressure by the secondary brake actuator assembly, the inlet valves (13) at the wheel brake units (9, 10) of the front wheels are situated in a more widely open position than the inlet valves (13) at the wheel brake units (8, 9, 10, 11) of the rear wheels.

5. Method according to any one of Claims 1 to 4, **characterized in that** the fault state of the primary brake actuator assembly is evaluated in an associated control unit and the secondary brake actuator assembly is controlled by the control unit.

6. Hydraulic brake system in a vehicle for carrying out the method according to any of Claims 1 to 5, having a primary brake actuator assembly and having a secondary brake actuator assembly for generating hydraulic brake pressure at wheel brake units (8, 9, 10, 11) at the front wheels and at the rear wheels of the vehicle.

7. Control unit for controlling the settable components of the brake system according to Claim 6.

## Revendications

1. Procédé permettant de piloter un système de freinage hydraulique dans un véhicule qui présente un système d'actionnement de frein primaire qui est réalisé sous la forme d'un système ESP (programme de stabilité électronique) doté d'une pompe hydraulique (18, 19), et un système d'actionnement de frein secondaire qui est réalisé sous la forme d'un frein assisté électromécanique (16) qui actionne un maître-cylindre de frein (4) dans le système de freinage afin de générer une pression de freinage hydraulique au niveau d'unités de frein de roue (8, 9, 10, 11) sur les roues avant et sur les roues arrière du véhicule, des soupapes d'admission réglables (13) permettant de régler la pression de freinage dans les unités de frein de roue (8, 9, 10, 11), dans lequel, en cas de panne du système d'actionnement de frein primaire, la pression de freinage hydraulique est générée par le système d'actionnement de frein secondaire, les soupapes d'admission (13) sur les roues arrière du véhicule étant fermées à l'état hors tension mais transférées à la position d'ouverture lorsqu'une pression différentielle définie est dépassée, le système d'actionnement de frein secondaire étant réalisé à canal unique, et toutes les unités de frein de roue (8, 9, 10, 11) étant alimentées par la même pression de freinage.

2. Procédé selon la revendication 1, **caractérisé en ce que** les soupapes d'admission (13) sur les unités de frein de roue (8, 11) sont réalisées sous la forme de soupapes ouvertes hors tension.

3. Procédé selon la revendication 1 ou 2, **caractérisé en ce que** les soupapes d'admission (13) sur les unités de frein de roue (8, 11) des roues avant restent en position ouverte en cas de panne du système d'actionnement de frein primaire et d'une génération de pression de freinage par le système d'actionnement de frein secondaire.

4. Procédé selon l'une quelconque des revendications 1 à 3, **caractérisé en ce que** les soupapes d'admission (13) sur les unités de frein de roue (9, 10) des roues avant se trouvent dans une position d'ouverture plus grande que les soupapes d'admission (13) sur les unités de frein de roue (8, 9, 10, 11) des roues arrière en cas de panne du système d'actionnement de frein primaire et d'une génération de pression de frein par le système d'actionnement de frein secondaire.

5. Procédé selon l'une quelconque des revendications 1 à 4, **caractérisé en ce que** l'état de défaut du système d'actionnement de frein primaire est évalué dans un appareil de commande associé, et le système d'actionnement de frein secondaire est piloté par l'appareil de commande.

6. Système de freinage hydraulique dans un véhicule permettant d'effectuer le procédé selon l'une quelconque des revendications 1 à 5, comprenant un système d'actionnement de frein primaire et un système d'actionnement de frein secondaire pour générer une pression de freinage hydraulique sur des unités de frein de roue (8, 9, 10, 11) sur les roues avant et sur les roues arrière du véhicule.

7. Appareil de commande permettant de piloter les composants réglables du système de freinage selon la revendication 6.
